Europäisches Patentamt

(19) European Patent Office

Office européen des brevets

(11) Publication number: **0 099 733**
**B1**

(12) **EUROPEAN PATENT SPECIFICATION**

(45) Date of publication of patent specification: **11.04.90**

(21) Application number: **83304101.5**

(22) Date of filing: **14.07.83**

(51) Int. Cl.⁵: **G 05 B 19/42**

(54) **Method and apparatus for creating NC programs.**

(30) Priority: **15.07.82 JP 123286/82**

(43) Date of publication of application:
**01.02.84 Bulletin 84/05**

(45) Publication of the grant of the patent:
**11.04.90 Bulletin 90/15**

(84) Designated Contracting States:
**DE FR GB**

(56) References cited:
**EP-A-0 060 039**
**EP-A-0 086 848**
**EP-A-0 092 377**
**US-A-3 689 892**
**US-A-3 790 876**

(73) Proprietor: **FANUC LTD**
**3580, Shibokusa Aza-Komanba Oshino-mura**
**Minamitsuru-gun Yamanashi 401-05 (JP)**

(72) Inventor: **Nozawa, Ryoichiro**
**12-1-2105, Sarugaku-cho**
**Shibuya-ku Tokyo (JP)**
Inventor: **Nobuyuki, Kiya**
**Yokokawacho-Jutaku 13-106 108, Yokokawa-cho**
**Hachioji-shi Tokyo (JP)**
Inventor: **Yoshino, Motoaki**
**3-27, Tamadaira**
**Hino-shi Tokyo (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a method for creating numerical control (NC) programs.

A known method of creating an NC program includes steps of placing an NC device in a playback mode (teach mode), transporting a movable machine element such as a table or tool to a desired position by a manual operation, keying in an address word X, Y or Z at said position for specifying an axis (the address word being a letter of the alphabet for specifying the nature of a numerical value which follows the address word), subsequently pressing an INSERT key for creating NC data XPx, YPy, ZPz using the present position (Px, Py, Pz) of the movable machine element, namely the position at which the element is located when the key is pressed, storing the NC data in an NC program (part program) storage area, and repeating the foregoing steps to create an NC program comprising plural items of NC data. Such a method is disclosed in US—A—3689892 and is described in the precharacterizing part of the attached Claim 1.

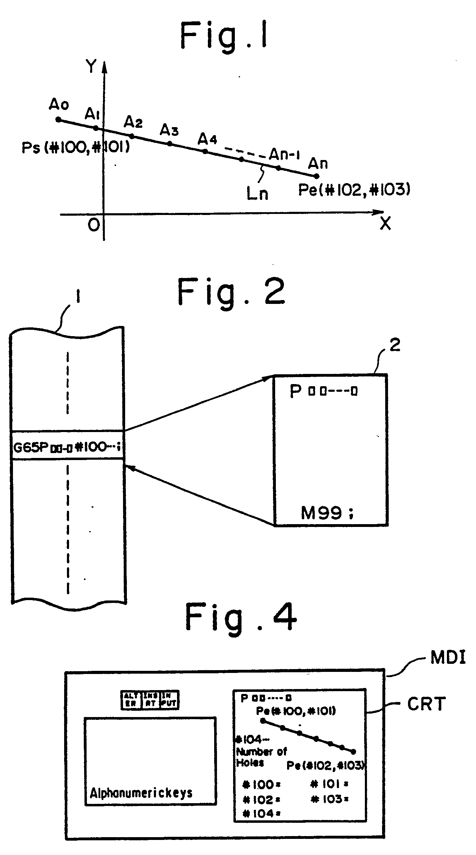

While the foregoing method is convenient in view of the fact that programming is unnecessary, difficulties are encountered when modifying a portion of the created NC data or when adding new NC data. Furthermore, NC data created by the conventional method is primarily position command data. Accordingly, when it is desired to bore equidistantly spaced bolt holes at (n+1)-number of positions A0, A1, ..., An on a prescribed straight line Ln, as shown in Fig. 1, the operator must undertake the troublesome task of teaching each one of the positions A0, A1, ..., An. Even more work is required when the pattern shown in Fig. 1 is included in a single NC program at several locations, for the operator must then teach the aforementioned positions each time.

The method adopted most widely for creating numerical control programs in recent numerical control systems relies upon a subprogram such as a user macro function. A user macro (also referred to as a custom macro) is a function, composed of a group of instructions, that is previously registered in memory just as a subprogram would be. The registered function is represented by a single instruction inserted in the NC program in advance, and the operation specified by the function is executed when the instruction, referred to as a macro call instruction, is eventually read from the numerical control program. The chief advantages of the user macro are (a) variables can be used in the macro, (b) arithmetic operations among the variables are possible, these being referred to as inter-variable calculations, and (c) the variables can be set to actual numerical values. User macros are disclosed in EP—A—0041336.

Fig. 2 is an explanatory view useful in describing the relation between an ordinary NC program, indicated at numeral 1, and a user macro shown at numeral 2. It will be seen that a user macro call instruction has been inserted in the NC program at a suitable location. The instruction is given by:

$$G65\ P_{\square\square\square}...\ _{\square}+100...\ \#101...\ \#102...$$
$$\#103...\ \#104...;\qquad(1)$$

The user macro 2 having the user macro identification $P_{\square\square}..._{\square}$ is programmed to have an instruction for forming bolt holes in a workpiece at (n+1)-number of equidistantly spaced positions A0, A1, A2,... An located on a straight line Ln connecting a starting point $P_s(\#100, \#101)$ and an end point $P_e(\#102, \#103)$, as shown in Fig. 1, the number n+1 being specified by a variable $\#104$. An instruction M99 is inserted at the end of the user macro to effect the return to the NC program 1.

When the user macro call instruction given by (1) shown above is read during the course of processing executed based on the NC program, the numerical control device calls the user macro 2 corresponding to the macro identification $P_{\square\square\square}..._{\square}$ and executes processing for the machining of the bolt holes shown in Fig. 1 by setting the variables $\#100, \#101, \#102, \#103, \#104$ in the user macro to values specified in the call instruction. After completing the machining processing, the NC device reads M99 and returns to processing based on the NC program 1.

Thus, NC machining processing conforming to predetermined patterns can be executed by previously registering a number of user macros in a memory, and inserting the user macro call instruction G65 in the NC program, followed by the user macro identification and the values which specify the variables.

The above-described user macro function is extremely useful because a machine tool can be made to perform operations tailored to the particular needs of the user, and because programming is simplified.

As mentioned above, the conventional NC data creating method using a playback (teach) mode is basically confined to the creation of position command data, so that it has not been possible with this method to incorporate a pattern playback function, using the increasingly popular subprograms and user macros, in an NC program. Consequently, there is a limitation upon processing efficiency in the conventional method of creating an NC program using the playback (teach) mode.

It is desirable to provide a method for creating an NC program in which NC data can be modified simply and new NC data inserted in a playback (teach) mode, and in which a pattern playback function can be readily incorporated in an NC program.

According to the present invention there is provided a method of creating a numerical control program containing plural items of numerical control data, wherein the present position of a movable machine element is stored in memory, the movable machine element is transported to a desired position, an item of numerical control data is created based on the new present position of the movable machine element, and the foregoing sequence is repeated to create plural items of numerical control data included in the numerical control program, characterised by the steps of:

storing in memory one or more subprograms utilising variables, and

inserting in the numerical control program numerical control data for controlling the movable machine element on the basis of a prescribed subprogram and specific values of said variables, this insertion comprising entering into the numerical control program an identification of said subprogram, and further comprising entering into the numerical control program values of variables, used in said subprogram, by entering a present position of the movable machine element at which it has been manually positioned.

Reference will now be made, by way of example, to the accompanying drawings, in which:

Fig. 1 is a diagram of a pattern capable of being programmed by a subprogram or user macro;

Fig. 2 is an explanatory view for describing the relationship between an ordinary NC program and a user macro;

Fig. 3 is a block diagram illustrating an embodiment of an apparatus for creating an NC program according to the present invention;

Fig. 4 is a view useful in describing a manual data input (MDI) unit;

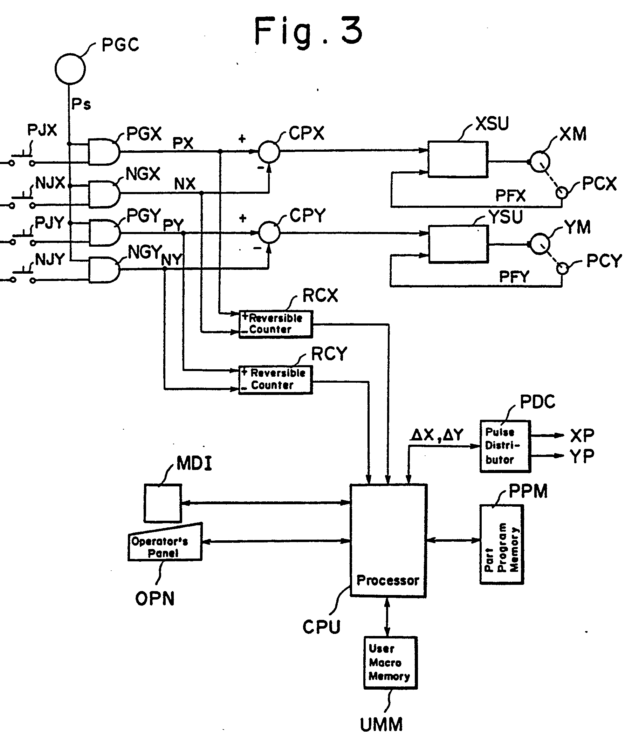

With reference to Fig. 3 there is shown a central processor CPU for executing NC data creation processing, described later, when a mode selection switch on an operator's panel OPN is set to the playback (teach) mode. Jog feed buttons PJX, NJX, PJY, NJY are provided on the operator's pendant OPN for performing a jog-feed along the X axis in the positive and negative directions and along the Y axis in the positive and negative directions, respectively. Pressing a jog button in the playback mode causes a corresponding AND gate PGX, NGX, PGY, or NGY to open, so that pulses Ps generated by a pulse generator PGC are delivered as $+X$, $-X$, $+Y$, $-Y$ manual feed pulses PX, NX, PY, NY, respectively. The pulses PX, NX enter an adder CPX and a reversible counter RCX, and the pulses PY, NY enter an adder CPY and a reversible counter RCY. The adder CPX adds the pulses PX, NX and applies the resulting pulse train to an X-axis servo unit XSU for driving an X-axis motor XM. Likewise, the adder CPY adds the pulses PY, NY and applies the resulting pulse train to a Y-axis servo unit YSU for driving a Y-axis motor YM. Whenever the X- and Y-axis motors XM, YM rotate by a predetermined amount, corresponding pulse coders PCX, PCY issue a single feedback pulse PFX, PFY, respectively, these being fed back to the respective X- and Y-axis servo units XSU, YSU. Each servo unit controls the corresponding motor in such a manner that the difference between the number of pulses input thereto and the number of feedback pulses approaches zero.

Concurrently, as described above, the manual pulses are applied to the reversible counters RCX, RCY, which serve as X- and Y-axis present position counters, respectively. Specifically, the $+X$ and $-X$ manual pulses PX, NX are applied to the upcount $(+)$ and downcount $(-)$ terminals, respectively, of the reversible counter RCX, and the $+Y$ and $-Y$ manual pulses PY, NY are applied to the upcount $(+)$ and downcount $(-)$ terminals, respectively, of the reversible counter RCY. The reversible counter RCX is counted up each time a $+X$ manual pulse PX is generated, and is counted down each time a $-X$ manual pulse NX is generated, so that the contents of the counter will always indicate the present position along the X-axis. Likewise, the reversible counter RCY is counted up each time a $+Y$ manual pulse PY is generated, and is counted down each time a $-Y$ manual pulse NY is generated, so that the contents of the counter will always indicate the present position along the Y-axis.

Through the foregoing series of operations, a movable machine element is manually positioned at a desired position P1, the coordinates whereof are $x_1$, $y_1$. Following positioning, the operator goes to the manual data input unit MDI (Fig. 4) and presses the following keys in the order mentioned: "X", "INSRT", "Y", "INSRT", ";". The central processor CPU responds by using the present position $(x_1, y_1)$, stored in the reversible counters RCX, RCY, to create the NC data $Xx_1$, $Yy_1$, the latter then being stored in a part program memory PPM.

The foregoing steps are repeated in like fashion to create items of NC data and store the NC data in the part program memory. After the movable machine element is positioned at a prescribed point, such as the point Ps in Fig. 1, a user macro call instruction is inserted for producing n-number of equidistantly spaced bolt holes on the straight line Ln. Specifically, using the manual data input unit MDI, the operator enters G65 $P_{\square\square\cdots\square}$, causing the CRT of the MDI unit to display the user macro variables indicated by the macro identification $P_{\square\square\cdots\square}$, and in addition, to display the particular pattern as shown in Fig. 4 whenever necessary. Next, the operator selects the variable #100 for which a value is to be set, and presses the "X" key and then the "INPUT" key on the MDI unit, whereby the variable having variable number #100 is specified by the present position along the X-axis. This is followed by selecting the variable number #101 and pressing the "Y" key and then the "INPUT" key to specify the variable having variable number #101 by the present position along the Y-axis.

Upon completing the foregoing steps, the movable machine element is manually positioned at the point Pe (Fig. 1). The operator then selects variable number #102 for which a value is to be set, and presses the "X" key and then the "INPUT" key on the MDI unit, whereby the variable having variable number #102 is specified by the present position along the X-axis. This is followed by selecting the variable number #103 and pressing the "Y" key and then the "INPUT" key to specify the variable having variable number #102 by the present position along the Y-axis. Finally, the operator selects the variable number #104 and enters a partitioning number n.

This creates a user macro for playing back the pattern shown in Fig. 1, and stores the user macro in the part program memory PPM.

Thus, unlike the conventional method which requires the teaching of n+1 points, only two points and the partitioning number need be commanded according to the present invention, thereby facilitating the operator's task.

The foregoing operations are repeated in the same manner to create and store the desired part program in the part program memory.

Following the completion of the part program, an automatic running mode is selected by the mode changeover switch on the operator's panel OPN. This is followed by pressing a cycle start button, which will cause the central processor CPU to call instructions from the part program memory PPM one at a time and to execute numerical control processing based on these instructions. When an item of position command data is encountered in the data read out of the memory PPM, incremental values $\Delta X$, $\Delta Y$ are computed and applied to a pulse distributor PDC. The latter performs a pulse distribution computation based on $\Delta X$ and $\Delta Y$, thereby producing distributed pulses XP, YP that are applied to the X- and Y-axis servo units XSU, YSU, respectively. (It should be noted that the lines for carrying these pulses from the pulse distributor to the servo units are not shown in the drawing). The servo units XSU, YSU drive the motors XM, YM into rotation, thereby transporting the movable machine element, such as the table or tool.

When the central processor CPU reads a user macro call instruction out of the part program memory PPM, the processor goes to a user macro memory UMM and reads out the user macro specified by the user macro identification in the user macro call instruction. The variable numbers #100 through #104 in the user macro are then replaced by the values indicated in the part program. NC processing thus is performed in accordance with the pattern shown in Fig. 1.

The foregoing is an example wherein a user macro call instruction is inserted in an NC program in the playback (teach) mode.

## Claims

1. A method of creating a numerical control program containing plural items of numerical control data, wherein the present position of a movable machine element is stored in memory, the movable machine element is transported to a desired position, an item of numerical control data is created based on the new present position of the movable machine element, and the foregoing sequence is repeated to create plural items of numerical control data included in the numerical control program, characterised by the steps of:

storing in memory one or more subprograms utilising variables, and

inserting in the numerical control program numerical control data for controlling the movable machine element on the basis of a prescribed subprogram and specific values of said variables, this insertion comprising entering into the numerical control program an identification of said subprogram, and further comprising entry into the numerical control program values of variables, used in said subprogram, by entering a present position of the movable machine element at which it has been manually positioned.

2. A method according to Claim 1, further comprising steps of entering a variable number assigned to a variable and sequentially pressing a key corresponding to an address word and an input key, thereby specifying the variable of said variable number of the present position of the movable machine element along an axis indicated by the address word.

3. A method according to Claim 1 or 2, further comprising entering into the numerical control program further values of variables used in said subprogram by manually positioning the movable machine element at a desired position thereof at the end of the prescribed subprogram, and entering said position as values of said variables.

4. A method according to Claim 3, wherein the prescribed subprogram defines operations to be performed along a straight line joining said present position and said desired position of the movable machine element at the end of the prescribed subprogram, and the method further comprises entering into the numerical control program a further value of a variable, used in said subprogram, by entering a partitioning number indicating the number of said operations to be performed at equal distances along said straight line.

5. A method according to Claim 4, wherein said operations are the borings of holes.

## Patentansprüche

1. Verfahren zur Herstellung eines numerischen Steuerprogramms, das eine Vielzahl von Datenwörtern aus numerischen Steuerdaten enthält, wobei die augenblickliche Position eines bewegbaren Maschinenelements in einem Speicher gespeichert wird, das bewegbare Maschinenelement zu einer gewünschten Position transportiert wird, ein Datenwort aus numerischen Steuerdaten auf der Grundlage der neuen augenblicklichen Position des bewegbaren Maschinenelements erzeugt wird und die vorhergehende Folge wiederholt wird, um eine Vielzahl von Datenwörtern aus numerischen Steuerdaten, die in dem numerischen Steuerprogramm enthalten sind, zu erzeugen, gekennzeichnet durch Schritte zum

Speichern eines oder mehrerer Teilprogramme, das oder die Variablen benutzt oder benutzten, in einem Speicher und

Einfügen von numerischen Steuerdaten zum Steuern des bewegbaren Maschinenelements in das numerische Steuerprogramm auf der Grundlage eines vorgeschriebenen Teilprogramms und von spezifischen Werten der Variablen, wobei diese Einfügung umfaßt: das Einführen einer Kennung des Teilprogramms in das numerische Steuerprogramm und ferner das Einführen von Werten der Variablen in das numerische Steuerprogramm, die in dem Teilprogramm benutzt werden, durch Einführen einer augenblicklichen Position des bewegbaren Maschinenelements, bei der es manuell positioniert worden ist.

2. Verfahren nach Anspruch 1, das ferner Schritte umfaßt zum Einführen einer Variablen-Nummer, die einer Variablen zugeteilt ist, und sequentielles Drücken einer Taste entsprechend einem Adreßwort und einer Eingabetaste, um dadurch die Variable der Variablen-Nummer für die augenblickliche Position des bewegbaren Maschinenelements längs einer Achse zu spezifizieren, die durch das Adreßwort angegeben ist.

3. Verfahren nach Anspruch 1 oder 2, das ferner das Einführen weiterer Werte von Variablen in das numerische Steuerprogramm, die in dem Teilprogramm benutzt werden, durch manuelles Positionieren des bewegbaren Maschinenelements bei einer gewünschten Position desselben an dem Ende des vorgeschriebenen Teilprogramms und das Einführen der Position als Werte der Variablen in das numerische Steuerprogramm umfaßt.

4. Verfahren nach Anspruch 3, bei dem das vorgeschriebene Teilprogramm Operationen definiert, die längs einer geraden Linie durchzuführen sind, welche die augenblickliche Position und die gewünschte Position des bewegbaren Maschinenelements an dem Ende des vorgeschriebenen Teilprogramms verbindet, wobei das Verfahren ferner das Einführen eines weiteren Werts einer Variablen in das numerische Steuerprogramm, die in dem Teilprogramm benutzt wird, durch Einführen einer Unterteilungszahl umfaßt, die die Anzahl der Operationen angibt, welche bei gleichen Abständen längs der geraden Linie durchzuführen sind.

5. Verfahren nach Anspruch 4, bei dem die Operationen aus dem Bohren von Löchern bestehen.

**Revendications**

1. Un procédé de création d'un programme de commande numérique comprenant plusieurs éléments de données de commande numérique, dans lequel la position actuelle d'un élément mobile de machine est stockée en mémoire, l'élément mobile de machine est transporté jusqu'à une position désirée, un élément de données de commandes numériques est créé à partir de la nouvelle position actuelle de l'élément mobile de machine, et la séquence précédente est répétée pour créer plusieurs éléments de données de commande numérique inclus dans le programme de commande numérique, caractérisé par les opérations qui consistent à:

stocker dans une mémoire un ou plusieurs sous-programmes utilisant des variables et

insérer dans le programme de commande numérique des données de commande numérique pour commander l'élément mobile de machine à partir d'un sous-programme voulu et des valeurs spécifiques desdites variables, cette insertion comprenant l'introduction dans le programme de commande numérique d'une identification dudit sous-programme, et comprenant encore l'introduction dans le programme de commande numérique de valeurs des variables, utilisées dans ledit sous-programme en introduisant une position actuelle de l'élément mobile de machine à laquelle il a été amené manuellement.

2. Un procédé selon la revendication 1, comprenant encore des opérations qui consistent à introduire un numéro de variable affecté à une variable et à appuyer ensuite sur une touche correspondant à un mot d'adresse et sur une touche d'entrée, de façon à spécifier à la variable ayant ledit numéro de variable la position réelle de l'élément mobile de machine le long d'un axe défini par le mot adresse.

3. Un procédé selon l'une des revendications 1 ou 2, comprenant encore l'introduction dans le programme de commande numérique d'autres valeurs des variables utilisées dans ledit sous-programme en positionnant manuellement l'élément mobile de machine à la position désirée à la fin du sous-programme prescrit, et l'introduction de ladite position comme valeurs desdites variables.

4. Un procédé selon la revendication 3, dans lequel le sous-programme prévu défini des opérations à effectuer le long d'une ligne droite joignant ladite position réelle et ladite position souhaitée de l'élément mobile de machine à la fin du sous-programme prescrit, et le procédé comprenant encore l'introduction dans le programme de commande numérique d'une autre valeur de variable, utilisée dans ledit sous-programme, en introduisant un numéro de partition qui désigne le nombre desdites opérations à effectuer à des distances égales le long de la ligne droite.

5. Un procédé selon la revendication 4, dans lequel lesdites opérations consistent à forer des trous.

# Fig.1

# Fig. 2

# Fig.4

# Fig.3